# EUROPEAN PATENT APPLICATION

(11) **EP 4 468 520 A1**
(43) Date of publication of application: **27.11.2024**
(21) Application number: 23743215.8
(22) Date of filing: 16.01.2023
(51) Int. Cl.: H01Q 9/04, H01Q 1/24, H01Q 21/28

(54) **ANTENNA MODULE, AND WIRELESS COMMUNICATION DEVICE**

(30) Priority: 18.01.2022 JP 2022005953
(71) Applicant: DENSO CORPORATION, Kariya-city, Aichi-pref., 448-8661 (JP)
(72) Inventor: INAGAKI Tatsuya, Kariya-city Aichi-pref. 448-8661 (JP); KAKUYA Yuuji, Kariya-city Aichi-pref. 448-8661 (JP); NAKAKURA Yohei, Kariya-city Aichi-pref. 448-8661 (JP)
(74) Representative: Winter, Brandl - Partnerschaft mbB
(86) International application number: PCT/JP2023/001007
(87) International publication number: WO 2023/140221

(57) **Abstract**

A conductive pattern, as an antenna, includes: a radiating element (7a) formed in an inverted F shape; and a feeding element (8a) for indirectly feeding power to the radiating element. The radiating element (7a) includes a main body (71a), a short circuit part (72a), and a powered part (73a). The main body (71a) is a member longer than the short circuit part (72a) and the powered part (73a). The short circuit part (72a) is connected to the main body (71a) at right angle at one end of the main body (71a). The powered part (73a) extends from a middle of the main body (71a) in a direction perpendicular to the main body (71a) so as to have a predetermined distance from, for example, the short circuit part (72a). The feeding element (8a) is formed to face the powered part (73) below the powered part (73).

## Description

### CROSS REFERENCE TO RELATED APPLICATIONS

This application is based on Japanese Patent Application No. 2022-005953 filed on January 18, 2022, the disclosure of which is incorporated herein by reference in its entirety.

### TECHNICAL FIELD

The present disclosure relates to an antenna module and a wireless communication device that can be downsized.

### BACKGROUND ART

Patent Document 1 discloses a communication system that estimates a distance between devices based on a two-frequency phase difference, which is a difference in reception phase for each frequency obtained by transmitting and receiving signals of two frequencies between the devices.

### PRIOR ART LITERATURE

### PATENT LITERATURE

Patent Document 1: JP H11-183602 A

### SUMMARY OF INVENTION

Radio signals transmitted and received between devices are reflected by reflective object such as vehicle body or the ground, and can take various propagation paths. Naturally, the propagation path of a signal reflected by a reflective object is longer than the actual distance between the devices. For this reason, errors may occur due to the influence of reflected waves in a distance measurement method that utilizes the time of flight (ToF) of radio signals, such as two-frequency phase difference. Although it is preferable to use plural antennas in order to suppress the probability of occurrence of ranging errors (erroneous measurements), increasing the number of antennas provided in a communication device may increase the size of the communication device. Therefore, there is a need for downsizing each antenna. The downsizing is required not only in antennas for distance measurement communication but also in antennas for data communication.

The present disclosure has been made based on the above considerations or points of view, and one of its objectives is to provide an antenna module and a wireless communication device that can be miniaturized.

An antenna module disclosed herein includes a substrate, an antenna for transmitting or receiving radio waves in a predetermined frequency band, and a ground portion that is a conductor to provide a ground potential for the antenna. The antenna has a radiating element that is a conductor formed in an inverted F shape, and a feeding element that is a conductor for non-contactly feeding power to the radiating element through electromagnetic coupling. The radiating element has a main body that is a linear conductor, a short circuit part that connects one end of the main body to the ground portion, and a powered part whose one end is connected to a middle of the main body and whose other end is an open end. The feeding element is formed parallel to at least a portion of the powered part.

Accordingly, an inductance component generated by electromagnetic coupling between the powered part and the feeding element contributes to lowering the operating frequency, so that the antenna itself can be made smaller.

A wireless communication device disclosed herein includes: a substrate; a first antenna for transmitting and receiving radio waves in a predetermined frequency band; a second antenna for transmitting and receiving radio waves in the frequency band; a ground portion that is a conductor to provide a ground potential for the first antenna and the second antenna; and a signal processor that transmits and receives a ranging signal to and from a target device using each of the first and second antennas. Each of the first and second antennas has a radiating element that is a conductor formed in an inverted F shape, and a feeding element that is a conductor for non-contactly feeding power to the radiating element through electromagnetic coupling. The radiating element has: a main body that is a linear conductor; a short circuit part connecting one end of the main body to the ground portion; and a powered part having one end connected to a middle of the main body and the other end which is an open end. The feeding element is formed to face a part of the powered part. The signal processor is configured to perform: generating a first ranging value as a ranging value that is a parameter indicating a distance to the target device by transmitting and receiving a ranging signal to and from the target device using the first antenna; generating a second ranging value as the ranging value by transmitting and receiving a ranging signal to and from the target device using the second antenna; and outputting a distance information relative to the target device, which is a smaller one of the first ranging value and the second ranging value to an apparatus that determines a position of the target device.

The wireless communication device is a radio device using the antenna module, and can be downsized due to the same effect as the antenna module.

The reference numerals in parentheses described in the claims indicate a correspondence relationship with the specific means described in the embodiment described later as one aspect, and do not limit the technical scope of the present disclosure.

### BRIEF DESCRIPTION OF DRAWINGS

FIG. 1 is an exploded perspective view of a radio device.
FIG. 2 is a diagram for explaining a configuration provided on a substrate.
FIG. 3 is a diagram for explaining a configuration of an antenna.
FIG. 4 is a diagram for explaining a configuration of an antenna.
FIG. 5 is a cross-sectional view taken along line V-V shown in FIG. 3.
FIG. 6 is a cross-sectional view taken along line VI-VI shown in FIG. 3.
FIG. 7 is a conceptual diagram for explaining a configuration in which a power feeding element is provided in an internal layer of a substrate.
FIG. 8 is a diagram schematically showing a configuration of an antenna proposed in the present disclosure.
FIG. 9 is a diagram showing a first comparative configuration.
FIG. 10 is a diagram showing a second comparative configuration.
FIG. 11 is a diagram for explaining operations of a signal processor.
FIG. 12 is a diagram for explaining operations of a signal processor.
FIG. 13 is a diagram showing a modification in arrangement of antennas with respect to a substrate.
FIG. 14 is a diagram showing a modification in arrangement of antennas with respect to a substrate.
FIG. 15 is a diagram showing a modification of an antenna structure.
FIG. 16 is a diagram showing a modification of a power feeding element.
FIG. 17 is a diagram showing an example of a configuration in which an antenna is formed three-dimensionally.
FIG. 18 is a diagram showing another example of a configuration in which an antenna is formed three-dimensionally.
FIG. 19 is a diagram showing another example of a configuration in which an antenna is formed three-dimensionally.
FIG. 20 is a diagram conceptually showing a directivity, relative to a vehicle, of a second antenna which is formed three-dimensionally.
FIG. 21 is a diagram showing a second antenna erected, as a monopole antenna, with respect to a substrate.
FIG. 22 is a diagram showing a second antenna which is an inverted L antenna formed three-dimensionally.
FIG. 23 is a flowchart showing a modification of a selection algorithm for a distance measurement value.

### DETAILED DESCRIPTION

Hereinafter, an embodiment of the present disclosure will be described below with reference to the drawings. In the following embodiment, members having the same function will be assigned the same reference numeral, and the descriptions thereof will be omitted. When only a part of a configuration is described, the other parts of the configuration may employ a preceding configuration described in the embodiment.

An expression "parallel" in the present disclosure is not limited to a completely parallel state, and may include an inclination of several degrees to about 15 degrees. That is, "parallel" includes a substantially parallel state (so-called approximately parallel). An expression "vertical" in the present disclosure is not limited to a completely vertical state, and may include an inclination of several degrees to about 15 degrees. An expression "oppose" in the present disclosure refers to a state of facing each other at a predetermined interval. An opposing state includes a state in which members substantially face each other, for example, with an inclination of 15 degrees.

### <Example of Usage>

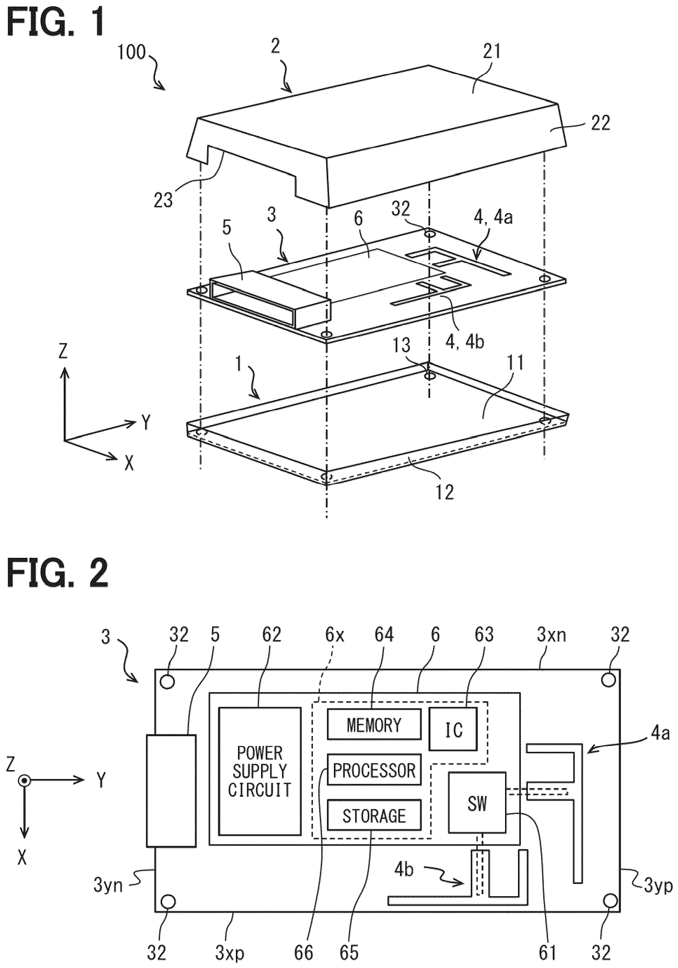

A radio device 100 shown in FIG. 1 and the like is configured to perform wireless communication using a predetermined communication method with a communication device (hereinafter referred to as a mobile terminal) carried by a user of a vehicle. Examples of mobile terminals include general-purpose information processing terminals such as smartphones and wearable devices, as well as smart key that is an electronic key for a vehicle. The radio device 100 is used by being connected to a smart ECU installed in a vehicle. An ECU is an abbreviation for electronic control unit and means an electronic control device. The mobile terminal corresponds to a target device.

The radio device 100 reports data indicating the reception strength of the radio signal from the mobile terminal and the distance from the mobile terminal to the smart ECU as information indicating the location of the mobile terminal. The data indicating the distance may directly indicate the distance itself, or may indirectly indicate the distance to the mobile terminal. Data that indirectly indicates the distance to the mobile terminal includes a round-trip time (RTT), two-frequency phase difference, and the like, which will be described later. The radio device 100 corresponds to a wireless communication device.

The radio device 100 can be placed at multiple locations in the vehicle. The radio device 100 may be attached to the interior side of the door-side B-pillar or C-pillar. The pillar refers to a pillar that supports a roof. The B pillar refers to a second pillar from the front side, and the C pillar refers to a third pillar from the front side. The door-side B-pillar refers to a part of the window frame of the door that comes into contact with the B-pillar of the vehicle body.

In addition, as another aspect, the radio device 100 is configured on the assumption that it will be placed near an external door handle for a driver seat or a passenger seat, a roof, a rearview mirror, a side mirror, a rear bumper, a trunk door handle, and the like. The radio device 100 is installed so that a circuit board 3, which will be described later, opposes an attachment target portion, which is a vehicle body corresponding to an attachment destination.

The smart ECU implements a passive entry and passive start system by performing wireless communication with a mobile terminal via the radio device 100. The smart ECU determines the position of the mobile terminal with respect to the vehicle based on the reception strength and distance information of signals from the mobile terminal inputted from the plural radio devices 100 mounted on the vehicle. If the smart ECU can confirm through wireless communication with the mobile terminal that the mobile terminal is near the door of the vehicle, the smart ECU unlocks/locks the door using the press of the door button as a trigger. Additionally, if the smart ECU confirms that the mobile terminal is present in the vehicle through wireless communication with the mobile terminal, the smart ECU turns on/off the driving power based on the user's operation on the start button (not shown). The traveling power source is a power supply for travel of the vehicle, and refers to an ignition power source when the vehicle is a combustion engine vehicle. When the vehicle is an electric vehicle or a hybrid vehicle, the driving power source refers to a system main relay.

### <Overview of Overall Configuration>

FIG. 1 is a diagram showing an example of a schematic configuration of the radio device 100. As shown in FIG. 1, the radio device 100 includes a lower case 1, an upper case 2, a circuit board 3, a first antenna 4a, and a second antenna 4b. The first antenna 4a and the second antenna 4b have substantially the same configuration. In this disclosure, the first antenna 4a and the second antenna 4b are also referred to as antenna 4 when not distinguished. The antenna 4 includes an inverted F-shape radiating element 7 as described later.

In the present disclosure, a direction perpendicular to the circuit board 3 is referred to as an up-down direction. A direction from the circuit board 3 toward the lower case 1 corresponds to a downward direction for the radio device 100, and a direction from the circuit board 3 toward the upper case 2 corresponds to an upward direction. The upward direction corresponds to a direction from a lower surface of the circuit board 3, which opposes the attachment target portion, toward an upper surface of the circuit board 3 as an opposite surface. The radiating element 7 is formed on the upper surface.

In this disclosure, the configuration of the radio device 100 will be explained by introducing a concept of a right-handed three-dimensional coordinate system having an X axis, a Y axis, and a Z axis orthogonal to each other. The X axis, the Y axis, and the Z axis illustrated in the drawings such as FIG. 1 represent a short direction of the circuit board 3, a longitudinal direction of the circuit board 3, and the up-down direction, respectively. In another aspect, when the circuit board 3 has a square shape, a direction along any one side can be set as the X axis.

A three-dimensional coordinate system including the X axis, the Y axis, and the Z axis explains the configuration of the radio device 100. When the radio device 100 is attached to a side surface of the vehicle interior such as a C-pillar, for example, the X axis corresponds to the longitudinal direction of the vehicle, the Y axis corresponds to the up-down direction of the vehicle, and the Z axis corresponds to the width direction of the vehicle.

The lower case 1 is combined with the upper case 2 to form a flat rectangular parallelepiped case (in other words, a housing) as a whole. The lower case 1 is a member that covers the circuit board 3 from the lower side to house and support the circuit board 3. The lower case 1 corresponds to a member that provides the bottom of the housing of the radio device 100. The lower case 1 plays a role of protecting the lower surface of the circuit board 3. The lower case 1 is formed using synthetic resin such as polycarbonate (PC).

The lower case 1 is formed in a flat (in other words, shallow) box shape with an opened upper surface. That is, the lower case 1 includes a bottom surface portion 11 facing the circuit board 3 at a predetermined interval, and a lower wall portion 12 extending upward from edge of the bottom surface portion 11. The lower wall portion 12 may be omitted. Through holes 13 are provided in the bottom surface portion 11 at positions corresponding to screw holes 32 of the circuit board 3 for a screw to pass through. The through holes 13 for screwing may be provided at the four corners of the bottom surface portion 11.

The lower case 1 may be made of metal. According to the lower case 1 made of metal, effects can be expected to improve a strength of the device and improve electrical connection, in other words, stability of a circuit ground, with the vehicle body. Further, the lower case 1 may be implemented by combining a metal member and a resin. The lower case 1 may be a member made of a metal frame covered with resin. The lower case 1 may have a structure in which a metal frame is embedded inside a resin member that provides an external shape.

The upper case 2 is a member that covers the circuit board 3 from the upper side to house and protect the circuit board 3. The upper case 2 is made of a resin material such as polycarbonate to allow radio waves to transmit therethrough. The upper case 2 can fit into the lower case 1 while housing the circuit board 3.

The upper case 2 is formed substantially in a box shape with an opened lower surface. Specifically, the upper case 2 includes a ceiling portion 21 opposing the upper surface of the circuit board 3 at a predetermined interval, and a side wall portion 22 extending downward from the edge of the ceiling portion 21. The ceiling portion 21 corresponds to a structure that provides the upper surface of the housing of the radio device 100. Dimensions of the side wall portion 22 are set such that a lower end of the side wall portion is combined with an upper end of the lower wall portion 12. An external side surface of the side wall portion 22 corresponds to a side surface portion.

The side wall portion 22 of the upper case 2 has a notch 23 for exposing the vicinity of tip of the connector 5 at position corresponding to the connector 5. The upper case 2 includes a step portion or the like having a hole for housing a screw at a position corresponding to the screw hole 32. The side wall portion 22 or the bottom surface portion 11 may have a metal fitting or the like for attaching the radio device 100 to the vehicle body. Various types of attachment mechanisms can be used for fixing the radio device 100 to the vehicle body.

The circuit board 3 is a plate member formed by mounting various electronic components on a printed circuit board. As a printed circuit board, it is possible to use a multilayer board in which multiple conductor layers are built up based on an insulating layer such as a glass epoxy board (FR4: Flame Retardant Type 4). Here, as an example, the circuit board 3 is realized using glass epoxy resin with a dielectric constant of about 4.3 to 4.9. The circuit board 3 is a single-sided board or a double-sided board not including an internal conductor layer. The circuit board 3 may be realized using a multilayer board including an internal conductor layer.

The circuit board 3 has a substantially rectangular shape to match the shape of the lower case 1. The circuit board 3 has four edges (sides), one of which is an edge 3xp parallel to the Y axis, relatively located on the positive side in the X axis direction. Another one of the four edges is an edge 3xn parallel to the Y axis, located on the negative side in the X axis direction. Another two edges of the circuit board 3 parallel to the X axis are an edge yp, relatively located on the positive side in the Y axis direction, and an edge yn, relatively located on the negative side in the Y axis direction.

The circuit board 3 includes a ground layer serving as a conductor layer electrically connected to a ground-side line of a power supply cable via a connector or the like. The ground layer provides ground potentials for various circuits. Here, as an example, the ground layer is formed on the lower surface of the circuit board 3. A conductor pattern that is formed in the ground layer to provide a ground potential is referred to as a ground portion 31. The ground portion 31 is a plate-shaped conductor member. A plate shape also includes a thin-film shape such as a copper foil.

The screw holes 32 are provided at four corners of the circuit board 3, for screwing the circuit board 3 to the lower case 1 and the upper case 2. Positions of the screw holes 32 can be appropriately changed, and may be defined in the lower case 1, the upper case 2, and the circuit board 3 while corresponding to each other. The positions corresponding to each other mean positions overlapping each other in a top view. The screw holes 32, in other words, fixing portions for fixing the circuit board 3 to the lower case 1 or the upper case 2 may be provided at four or more locations. As a method for maintaining a state in which the lower case 1, the upper case 2, and the circuit board 3 are combined, various locking structures such as snap fit can be adopted in addition to screwing. The screw hole 32 is an optional element.

As shown in FIG. 2, the first antenna 4a, the second antenna 4b, the connector 5, and the control circuit 6 are formed on the upper surface of the circuit board 3. Each of the first antenna 4a and the second antenna 4b represents the antenna 4 for transmitting and receiving radio waves in a predetermined target frequency band. The antenna 4 may be a transmitting/receiving antenna, or may be a receiving antenna. In the present disclosure, the expression "an antenna for transmitting and receiving a radio signal in a certain frequency band" may include not only an antenna used for both transmission and reception but also an antenna only used for reception. That is, the expression "transmission and reception" can be understood as at least one of transmission and reception. The same applies to the description of the communication IC 63 and the like. Since there is reversibility between transmission and reception of radio waves as operations of an antenna, an antenna capable of receiving certain radio waves can be regarded as an antenna capable of transmitting the radio waves.

The antenna 4 is able to transmit and receive radio waves in a frequency band used in short-range wireless communications such as Bluetooth (registered trademark) and Wi-Fi (registered trademark). The radio device 100 is configured to perform BLE (Bluetooth Low Energy) communication with a mobile terminal. Accordingly, the antenna 4 is able to transmit and receive radio waves of frequencies belonging to a band from 2400 MHz to 2500 MHz (hereinafter referred to as 2.4 GHz band).

The target frequency that is the operating frequency of the antenna 4 may be other frequency bands such as 700 MHz band or 5 GHz band. Further, the antenna 4 may transmit and receive radio waves (in other words, wireless signals) in a frequency band used in cellular communication. That is, the antenna may perform data communication with a wireless base station constituting 4G or 5G mobile communication system. The circuit board 3 on which the antenna 4 is formed corresponds to an antenna module. Details of the configuration of the antenna 4 will be described separately later.

The connector 5 is a component to which various cables, such as a power supply cable and a communication cable in communication with the smart ECU, are connected. The connector 5 is attached to the edge of the circuit board 3, for example, on the negative side in the Y axis direction.

The control circuit 6 is a circuit module that controls the operation of the radio device 100, and includes various electronic components. The control circuit 6 includes a switch 61, a power supply circuit 62, a communication IC 63, a memory 64, a storage 65, and a processor 66.

The switch 61 is a switch circuit for switching the antenna 4 to which the input/output terminal of the communication IC 63 is connected. The switch 61 can take a first connection state in which the first antenna 4a is connected to the communication IC 63, and a second connection state in which the second antenna 4b is connected to the communication IC 63. The connection state of the switch 61 is switched by the communication IC 63. The switch 61 may be configured as a three-state switch that can adopt a neutral state in which the communication IC 63 is not connected to the antenna 4.

The power supply circuit 62 is a circuit module that converts the voltage input from the power cable into a predetermined voltage suitable for the operation of the communication IC 63 and the like and outputs the voltage. The communication IC 63 is a circuit module that performs signal processing related to at least one of signal transmission and signal reception. The communication IC 63 performs at least one of modulation, demodulation, frequency conversion, amplification, digital-to-analog conversion, and detection. The communication IC 63 has a function of detecting the reception strength and the phase of the reception signal. Furthermore, the communication IC 63 may have a function of detecting a transmission/reception phase difference, which will be described later.

The memory 64 is a storage medium such as RAM (Random Access Memory). The storage 65 is a non-volatile storage device, and stores data such as programs executed by the processor 66 and operation setting values of the communication IC 63. The processor 66 is an arithmetic core such as a CPU (Central Processing Unit). The processor 66 generates information such as the reception strength of the signal from the mobile terminal and the measured distance value based on the data acquired by the communication IC 63, and transmits information to the smart ECU. The processor 66 and the communication IC 63 may be integrated, or one of them may be omitted.

In the present disclosure, a group of modules to perform signal processing, such as the communication IC 63, the memory 64, the storage 65, and the processor 66, is collectively referred to as a signal processor 6x. The signal processor 6x may be configured as one chip as a system-on-chip (SoC). The signal processor 6x may have a function as a smart ECU, such as a function for determining the position of a mobile terminal.

### <About the antenna configuration>

Here, the configuration of the first antenna 4a and the second antenna 4b will be explained. Hereinafter, "λ" represents a wavelength of a radio wave having a target frequency (hereinafter, also referred to as a target wavelength). For example, "λ/2" and "0.5λ" indicate a half of the target wavelength, and "λ/4" and "0.25λ" indicate one quarter of the target wavelength. The wavelength (i.e., λ) of a 2.4 GHz radio wave is 125 mm in vacuum and in air. In illustrating the dimensions of the members constituting the radio device 100, the expression using λ can be interpreted as an electrical length. The electrical length described herein is an effective length in consideration of a fringing electric field and a wavelength shortening effect caused by a dielectric. The electrical length may also be referred to as effective length. As a matter of course, for a portion that is not affected by the wavelength shortening effect or the like, λ can be defined as the length in vacuum or air.

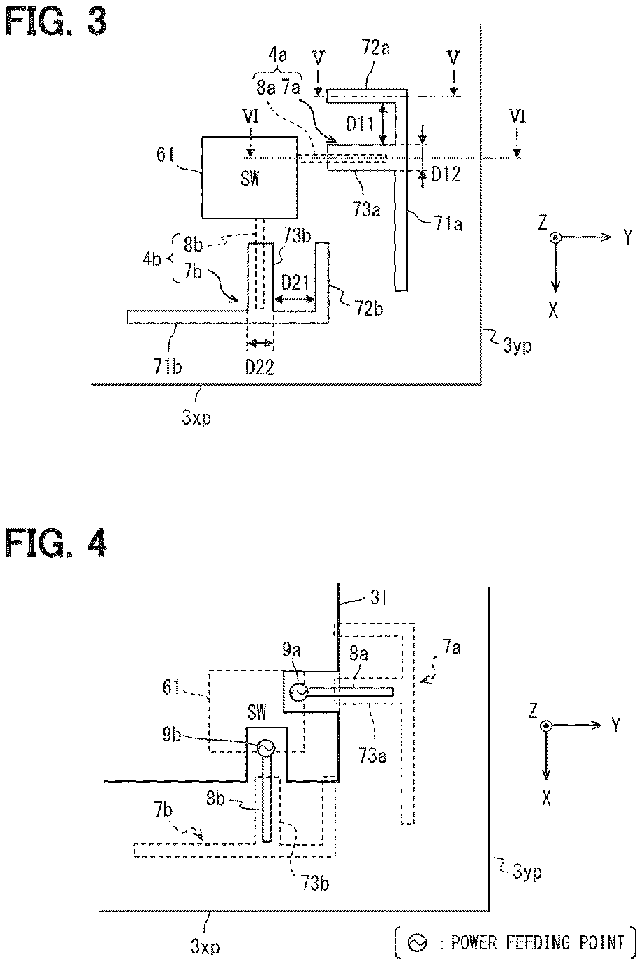

As described above, the first antenna 4a, the second antenna 4b, and the ground portion 31 are formed on the circuit board 3. As shown in FIG. 3, the first antenna 4a includes a radiating element 7a patterned in an inverted F shape on the surface of the substrate and a feeding element 8b that non-contactly feeds power to the radiating element 7a by electromagnetic coupling. The radiating element 7a includes a main body 71a, a short circuit part 72a, and a powered part 73a. The second antenna 4b includes a radiating element 7b patterned in an inverted F shape on the surface of the substrate, and a feeding element 8b that indirectly feeds power to the radiating element 7b. The radiating element 7b also includes a main body 71b, a short circuit part 72b, and a powered part 73b. A method for pattern-forming the radiating element 7a, 7b on the surface of the substrate includes electroplating, metal vapor deposition, and application of conductive paint.

The second antenna 4b has substantially the same configuration as the first antenna 4a. In the present disclosure, the feeding element 7a of the first antenna 4a and the feed element 7b of the second antenna 4b are referred to as a feeding element 7 when not distinguished from each other. Similarly, the expressions of the main body 71, the short circuit part 72, the powered part 73, and the feeding element 8 can be used, respectively, regarding the combinations of the main body 71a and the main body 71b, the short circuit part 72a and the short circuit part 72b, the powered part 73a and the powered part 73b, and the feeding element 8a and the feeding element 8b, if not distinguished from each other.

The first antenna 4a is arranged at the positive side of the switch 61 in the Y axis direction. The second antenna 4b is arranged at the positive side of the switch 61 in the X axis direction. The first antenna 4a and the second antenna 4b are arranged with their longitudinal directions perpendicular to each other.

The radiating element 7a, 7b is formed on the surface of the substrate. The feeding element 8a, 8b is formed on the lower surface of the circuit board 3, that is, on the same layer as the ground portion 31. As shown in FIG. 4, the ground portion 31 is formed over most of the lower surface of the circuit board 3. The ground portion 31 is formed at a distance of 2 mm or more from the feeding element 8a. The ground portion 31 has a notch at position where the feeding element 8a is formed. The notch for the feeding element 8a can be omitted. The ground portion 31 corresponds to a ground plane for the antenna 4.

The main body 71a of the first antenna 4a is a linear conductive element. In the present disclosure, the expression "linear" includes a shape having a fixed width/thickness. The expression "linear" also includes a band shape or a bar shape whose width and thickness are sufficiently smaller than the length in the longitudinal direction. In this embodiment, as an example, the main body 71a is formed in a linear shape. As another aspect, the main body 71a may include one or more bent portions, such as an L-shape or a meandering shape.

The main body 71a is formed at a position on the positive side of the switch 61 in the Y axis direction in a posture parallel to the X axis. More specifically, the main body 71a is arranged in a posture parallel to the X axis within a range 2 cm from the edge 3yp of the circuit board 3 on the positive side in the Y axis direction. The length of the main body 71a is, for example, 13.5 mm. The length of the main body 71a may be other value such as 12.5 mm or 15.0 mm. The length of the main body 71a can be influenced by the material of the circuit board 3.

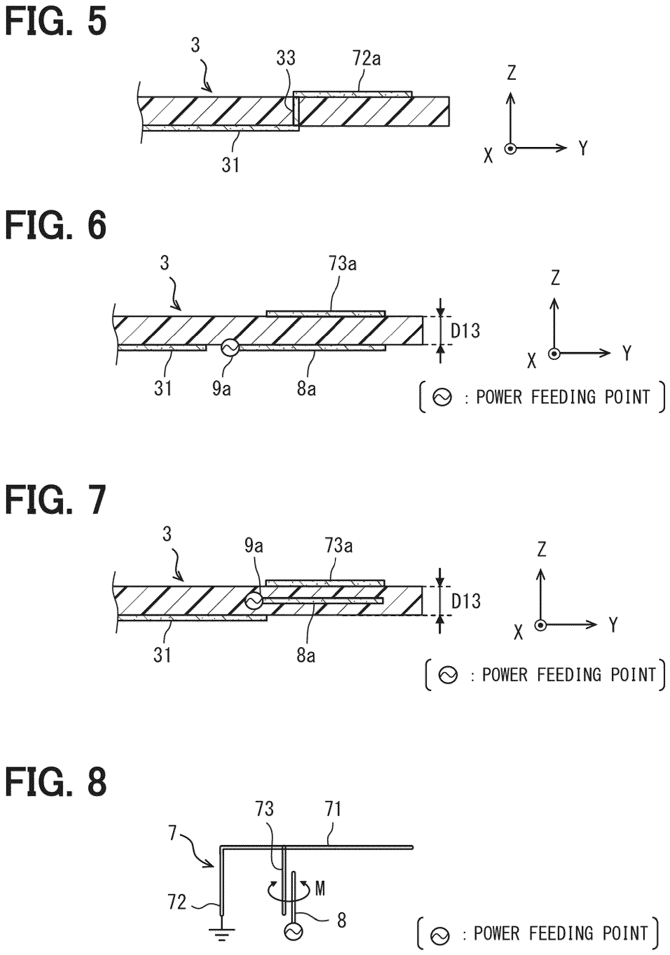

The short circuit part 72a is a conductor that connects one end of the main body 71a to the ground portion 31. The short circuit part 72a is arranged parallel to the Y axis from the end of the main body 71a on the negative side in the X axis direction toward the negative side in the Y axis direction. As shown in FIG. 5, the other end of the short circuit part 72a is electrically connected to the ground portion 31 formed on the lower surface of the circuit board 3 through a via 33 or the like. The length of the short circuit part 72a is set to, for example, 5 mm. The length of the short circuit part 72a may be other values such as 4 mm or 6 mm. The lengths of the short circuit part 72a and the main body 71a are designed such that the sum of the lengths resonates in the target frequency band. The total length of the short circuit part 72a and the main body 71a that resonate in the target frequency band can be determined by simulations using λ/4 as a reference. For example, the total length of the short circuit part 72a and the main body 71a is set to be smaller than λ/4 by approximately 10 mm.

The powered part 73a is a linear conductor having one end connected to the middle of the main body 71a and the other end being an open end. The open end here refers to an end that is not electrically connected to other conductors. The powered part 73a is formed parallel to the short circuit part 72a. The distance (D11) between the powered part 73a and the short circuit part 72 may be set to 3 mm, 5 mm, or the like. The positional relationship of members on the circuit board 3, in other words, the layout can be changed as appropriate. The length of the powered part 73a is the same as that of the short circuit part 72a. The powered part 73a may be formed shorter than the short circuit part 72a by a predetermined amount (1 to 2 mm). Further, the powered part 73a may be formed longer than the short circuit part 72a by a predetermined amount.

The width (D12) of the powered part 73a is set to be larger than the width of the feeding element 8a by a predetermined amount. For example, the powered part 73a is thicker than the feeding element 8 by about 1.0 mm. The widths of the main body 71a, the short circuit part 72a, and the feeding element 8a may be set to 1.0 mm. The width of each pattern can be changed as appropriate, and the widths of members may be different. The powered part 73 may have the same width (for example, 1.0 mm) as the main body 71 and the short circuit part 72.

The feeding element 8a is a linear element arranged on the lower surface of the circuit board 3 at a position overlapping with the powered part 73a. The feeding element 8a is a conductive pattern formed on the lower surface of the circuit board 3. As shown in FIG. 6, the feeding element 8a is formed parallel to the powered part 73a. The feeding element 8a of this embodiment is formed to oppose the entire section of the powered part 73a. The feeding element 8a may be formed to overlap at least a portion of the powered part 73a when viewed from the upper side.

The width of the feeding element 8 is set to about half the pattern width of the powered part 73, such as 0.5 mm. The feeding element 8 may be formed to have the same width as the powered part 73. However, according to a configuration in which the feeding element 8 is formed thinner than the powered part 73, an effect of increasing the power feeding efficiency can be expected compared to a configuration in which the feeding element 8 is thicker than the powered part 73.

The distance (D13) between the feeding element 8a and the powered part 73a, in other words, the thickness of the circuit board 3 is set to 1.0 mm or the like. The distance (D13) between the feeding element 8a and the powered part 73a may be set to a value that allows the feeding element 8a to be electromagnetically coupled to the powered part 73a. λ/20 is assumed to be an example of the limit value of the distance at which the feeding element 8a can be electromagnetically coupled to the powered part 73a. D13 may be 0.5 mm, 1.5 mm, or 2.0 mm. The smaller the distance between the feeding element 8a and the powered part 73a, the higher the degree of electromagnetic coupling, which is preferable.

One end of the feeding element 8a is an open end, and the other end is electrically connected to one contact provided in the switch 61. The other end electrically connected to the switch 61 acts as a power feeding point 9a. At the power feeding point, the antenna 4 is electrically connected with the signal terminal of the communication IC 63 via wiring such as a microstrip line or the switch 61. The power feeding point can be understood as a connection point with the communication IC 63 or the power supply line. Electrical energy flowing into the feeding element 8a from the power feeding point 9a propagates to the radiating element 7a through electromagnetic coupling with the powered part 73a, causing resonance.

The configuration of the second antenna 4b can be the same as that of the first antenna 4a except that the mounting orientation is different. The main body 71b of the second antenna 4b is a linear conductive element. The main body 71b is formed at a position on the positive side of the switch 61 in the X axis direction in a posture parallel to the Y axis. More specifically, the main body 71b is disposed in a posture parallel to the Y axis within 2 cm from the edge 3xp of the circuit board 3 on the positive side in the X axis direction. The length of the main body 71b is set to 13.5 mm. The length of the main body 71b may have other values. The extending direction of the main body 71a and the extending direction of the main body 71b are orthogonal to each other. In this configuration, the main body 71b is formed by rotating the main body 71a by 90 degrees.

The short circuit part 72b is a conductor that connects one end of the main body 71b to the ground portion 31. The short circuit part 72b is arranged parallel to the Y axis from the end of the main body 71b on the positive side in the Y axis direction toward the negative side in the X axis direction. The other end of the short circuit part 72b is electrically connected to the ground portion 31 formed on the lower surface of the circuit board 3 through the via 33. The length of the short circuit part 72b is set to 5 mm. The length of the short circuit part 72b may have other values. Similar to the radiating element 7a, the lengths of the short circuit part 72b and the main body 71b are designed such that the sum of the lengths resonates in the target frequency band.

The powered part 73b is a linear conductor, and one end is connected to the middle of the main body 71b, and the other end is an open end. The powered part 73b is formed parallel to the short circuit part 72b on the negative side of the short circuit part 72b in the Y axis direction. The distance (D21) between the powered part 73b and the short circuit part 72 may be 3 mm, 5 mm, or the like. D21 can be changed as appropriate. The length of the powered part 73b is the same as that of the short circuit part 72b. The powered part 73b may be formed shorter/longer than the short circuit part 72b by a predetermined amount (for example, 1 to 2 mm).

The width (D22) of the powered part 73b is set to be larger than the width of the power feeding element 8b by a predetermined amount. The powered part 73b may be formed thicker than the power feeding element 8b by approximately 1.0 mm. The widths of the main body 71b, the short circuit part 72b, and the power feeding element 8b are about 1.0 mm.

The power feeding element 8b is a linear element disposed on the lower surface of the circuit board 3 at a position overlapping with the powered part 73b. The power feeding element 8b may be a conductive pattern formed on the lower surface of the circuit board 3. The power feeding element 8b is formed parallel to the powered part 73b. The distance between the power feeding element 8b and the powered part 73b is set to 1.0 mm or the like. The distance between the power supply element 8b and the powered part 73b may be set to a value that allows the power feeding element 8b to be electromagnetically coupled to the powered part 73b. The length of the power feeding element 8 may be the same as that of the powered part 73, or may be shorter than the powered part 73.

One end of the power feeding element 8b is an open end, and the other end is electrically connected to one contact provided in the switch 61. The other end electrically connected to the switch 61 acts as a power feeding point 9b. Electrical energy flowing into the feeding element 8b from the power feeding point 9b propagates to the radiating element 7b via the powered part 73b due to electromagnetic coupling, causing resonance.

In one aspect, the circuit board 3 has two parasitic inverted F antennas disposed on one surface of a dielectric plate having a predetermined thickness and relative permittivity, and the feeding element 8a, 8b on the opposite surface.

Although the feeding element 8a is formed on the same surface as the ground portion 31, the configuration of the circuit board 3 is not limited to this. As shown in FIG. 7, the feeding element 8 may be formed in a different layer from the ground portion 31. The feeding element 8 may be formed in an internal layer. In that case, the ground portion 31 does not need a cutout portion to avoid electrical connection with the feeding element 8a. Further, the ground portion 31 serving as the ground plate may be formed inside the substrate.

When viewed from an opposite side, a radiation element in the inverted F shape appears to be in an F shape. The expression "inverted F antenna" follows a customary name in the technical field of antennas. The expression "inverted F antenna" also includes an F-shaped antenna that is not inverted. That is, the inverted F antenna can also be called an F-shaped antenna. An inverted L antenna, which will be described later, can also be called an L-shaped antenna.

<Effects of the antenna structure>

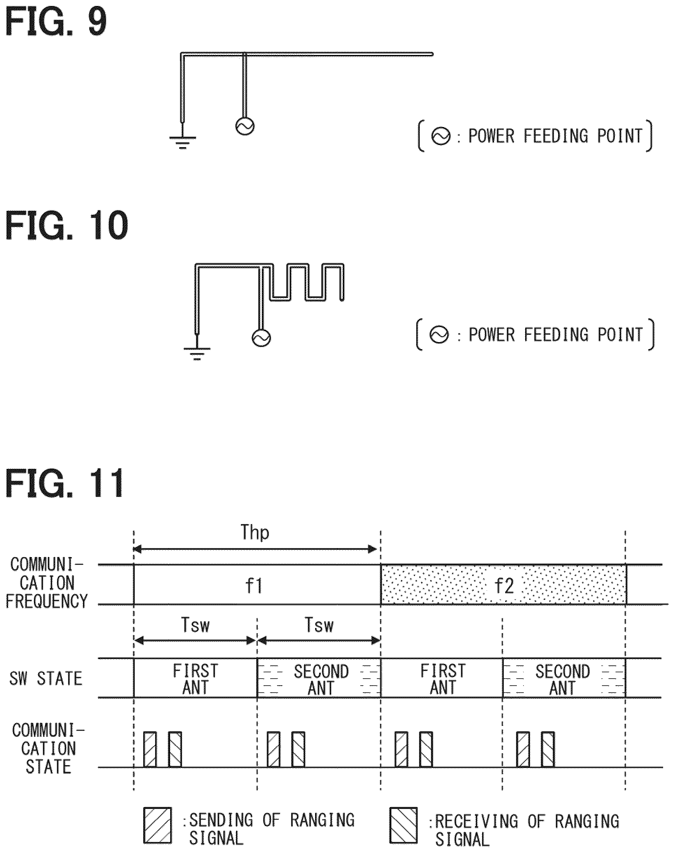

Here, the effects of the antenna structure of the embodiment (hereinafter referred to as proposed configuration) will be explained using first and second comparative configurations. FIG. 8 schematically shows the proposed configuration. FIG. 9 is a diagram showing a first comparative configuration. The first comparative configuration is an inverted F antenna in which power is directly fed to the powered part. The second comparative configuration refers to a configuration in which a part of the main body of the first comparative configuration is formed in a meandering shape, as shown in FIG. 10.

First, the advantages of the proposed configuration over the first comparative configuration will be described. The developers of the present disclosure simulated the length of the main body where resonance occurs at 2.4 GHz in each of the first comparative configuration and the proposed configuration. It is found that the required length is 23.55mm in the first comparative configuration, while the required length is 13.5 mm in the proposed configuration. In the simulations, the length and the width of the short circuit part and the powered part, other than the length of the main body and the power feeding method, are set to be the same between the first comparative configuration and the proposed configuration.

The reason for the above results is assumed to be as follows. In the proposed configuration in which power is supplied by electromagnetic coupling between the powered part 73 and the feeding element 8, the powered part 73 and the feeding element 8 form a mutual inductance, and the mutual inductance component determines the operating frequency. Specifically, when the mutual inductance component is M, the operating frequency (f) is determined by f∝1/√{(M+L)C}. According to the proposed configuration, it is possible to increase the inductance included in the antenna, thereby making it possible to achieve the downsizing.

The second comparative configuration is also considered as a configuration related to miniaturization of the antenna. In contrast to the first comparative configuration, the second comparative configuration can be expected to have the effect of suppressing the size of the antenna by forming the main body in a meandering shape. However, in the second comparative configuration, the capacitor (C) formed by the entire antenna increases because the meandering portions are capacitively coupled to each other or a part of the meandering portion is capacitively coupled to the ground portion. When the inductance of the antenna is L, the gain (G) as an antenna is proportional to L/C. In other words, since there is a relationship of G∝L/C, an increase in capacitor can lead to a decrease in gain. In response to such an issue, the configuration of the present embodiment can suppress an increase in capacitance component, compared to the second comparative configuration, and therefore can suppress a decrease in gain. In other words, it is possible to reduce the size of the antenna and maintain/improve the gain at the same time.

### <About the operation of the signal processor 6x>

The signal processor 6x has a function of acquiring a distance correspondence value that indirectly indicates the distance to the communication partner (mobile terminal) by transmitting and receiving a ranging signal to and from the mobile terminal. The distance correspondence value is a parameter indicating the flight time of a signal transmitted from a mobile terminal until received by the radio device 100. The distance correspondence value is a different parameter from the reception strength.

Specifically, the distance correspondence value is RTT or two-frequency phase difference. In this disclosure, communication for measuring RTT or two-frequency phase difference is also referred to as ranging communication. The ranging signal is a wireless signal for measuring RTT or two-frequency phase difference. The distance correspondence value indicates Time of Flight (ToF) for one way or round trip, and therefore can be called a ToF related value.

The RTT is measured as the time from transmitting a response request signal to a communication partner to receiving a response signal from the communication partner. The signal processor 6x subtracts an estimated value of the response processing time that occurs in the mobile terminal and an estimated value of the delay time that may occur in the radio device 100 from the elapsed time from when the signal is actually transmitted to when the signal is actually received. A value subjected to a predetermined correction process may be used as the RTT.

The two-frequency phase difference is a parameter specified when the radio device 100 and the mobile terminal transmit and receive continuous wave (CW) signals, and is the difference between the transmission and reception phase differences observed at each of two frequencies. The transmission/reception phase difference at a certain frequency corresponds to the phase difference between the CW signal of the target frequency transmitted toward the target and the CW signal of the target frequency returned from the target.

The transmission/reception phase difference can also simply be called a phase angle. The transmission/reception phase difference is determined by detecting the phase difference between the transmission signal and the reception signal by the radio device 100 and the mobile terminal transmitting and receiving CW signals to each other, and can be specified by calculating the average value of the phase differences observed by both. The signal processor 6x may use the reception phase of the CW signal transmitted from the mobile terminal as it is as the transmission/reception phase difference on the premise that the initial phase/local oscillator between devices is synchronized. The initial phase/local oscillator synchronization between devices can be achieved by transmitting predetermined synchronization signals. The two-frequency phase difference corresponds to a shift in the transmission/reception phase difference due to a change in frequency.

The signal processor 6x performs the distance measurement communication with the mobile terminal based on a request from the smart ECU or spontaneously, generates a distance correspondence value, and reports it to the smart ECU. The signal processor 6x of this embodiment calculates a two-frequency phase difference for each combination of frequencies used for BLE communication as a distance correspondence value. The reception intensity can also be observed from the ranging signal. For example, the signal processor 6x uses the ranging signal to identify the transmission/reception phase difference and the reception strength in parallel.

The division of roles within the signal processor 6x can be changed as appropriate. The communication IC 63 may specify the transmission/reception phase difference for each frequency, and the processor 66 may calculate the two-frequency phase difference for each frequency combination based on the transmission/reception phase difference for each frequency. The signal processor 6x may be configured to calculate RTT in addition to / instead of the two-frequency phase difference.

The signal processor 6x uses the first antenna 4a and the second antenna 4b in a time-sharing manner by alternately switching the connection state of the switch 61 as shown in FIG. 11. The signal processor 6x stores the reception strength of the signal from the mobile terminal acquired via the first antenna 4a in the memory 64 as a first reception strength. Further, the signal processor 6x stores the reception strength of the signal from the mobile terminal acquired via the second antenna 4b in the memory 64 as a second reception strength.

Further, the signal processor 6x performs the distance measurement communication and calculates a distance correspondence value and a measured distance value each time the antenna used for communication is switched or the frequency used is changed. The signal processor 6x stores the distance correspondence value obtained by the distance measurement communication using the first antenna 4a in the memory 64 as a first distance correspondence value. Further, the signal processor 6x stores the distance correspondence value obtained by the distance measurement communication using the second antenna 4b in the memory 64 as a second distance correspondence value.

In BLE communication, frequency hopping is performed after a connection is established. The hopping period (Thp), which defines the interval at which the frequency can be changed, can be set to different/arbitrary values depending on the network. The hopping period may be a fixed value or may be dynamically determined for each communication connection / data communication according to a predetermined communication sequence.

The switching interval (Tsw) of the antenna 4 may be set shorter than the hopping period, or may be set longer than the hopping period. FIG. 11 illustrates a case where the switching interval is set to half the hopping period. Note that f1 shown in FIG. 11 is a first frequency that is an arbitrary frequency belonging to the 2.4 GHz band. Also, f2 is a second frequency that is a different frequency from the first frequency among frequencies belonging to the 2.4 GHz band.

If the hopping period is set to about 100 milliseconds, the switching interval may be set to 20 milliseconds, 50 milliseconds, or the like. In a configuration in which the switching interval is set to half the hopping period, the distance measurement communication using each antenna 4 is performed in sequence while one channel is maintained.

Here, as an example, the switching interval (Tsw) of the antenna 4 is set to less than or equal to half the hopping period. The signal processor 6x performs ranging communication for each antenna while one channel is maintained. The signal processor 6x may be configured to perform distance communication by changing the connection state of the switch 61 at the timing when the frequency is switched and at the timing when half of the hopping period has passed since the frequency change, to perform the measurement using the antenna 4 according to the connection state after switching.

Furthermore, if the hopping period is set to about 10 milliseconds, the switching interval may be set to 50 milliseconds, 100 milliseconds, or the like. In a configuration where the switching interval is set to be twice or more than the hopping period, the signal processor 6x may transmit and receive the ranging signal every time the frequency switches twice. In a communication system that does not employ frequency hopping, the signal processor 6x may intentionally change the communication frequency by exchanging predetermined control signals with the mobile terminal. The frequency used may be changed each time the distance measurement communication is performed for each antenna 4.

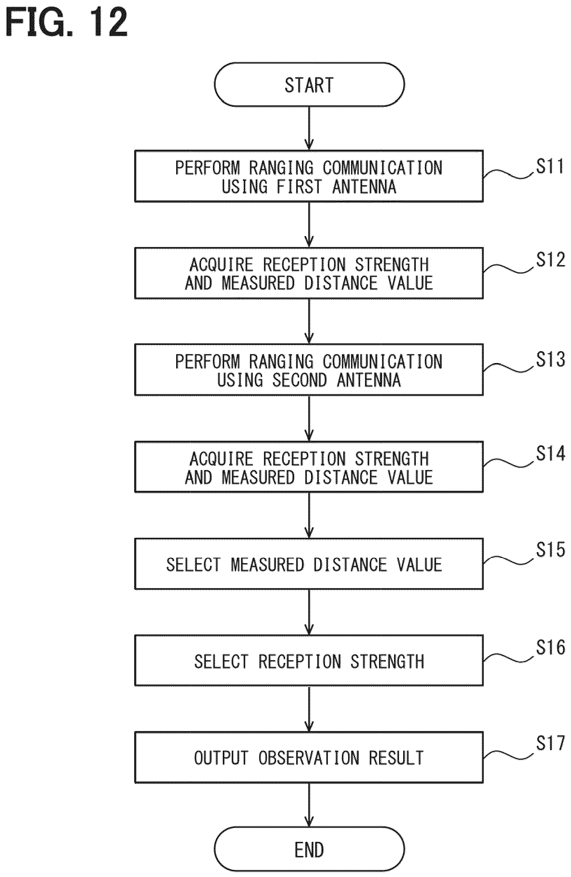

FIG. 12 is a flowchart for explaining a distance reporting process performed by the signal processor 6x, and may include steps S11 to S17. The distance reporting process is a series of processes for reporting data related to the distance from the radio device 100 to the mobile terminal, as its own device (itself), to the smart ECU. The signal processor 6x performs the distance reporting process at predetermined intervals when the radio device 100 as its own device or another device such as another radio device 100 mounted on the vehicle is connected for communication with the mobile terminal. The flowchart shown in the present disclosure is merely an example, and the number of steps constituting the flowchart, the order of execution of processes, and the execution conditions can be changed as appropriate. The signal processor 6x may perform the distance reporting process based on an external input of a sensor signal indicating that a door handle or a start button of the vehicle has been operated by the user.

In Step S11, the ranging communication using the first antenna 4a is performed. Step S11 includes setting the connection state of the switch 61 to the first connection state, transmitting a ranging signal to the mobile terminal, and receiving a response from the mobile terminal. The ranging signal exchanged with the mobile terminal may be a predetermined command signal requesting a return response, or may be a CW signal.

In Step S12, the reception strength, the distance correspondence value, and the measured distance value are acquired based on the result of receiving the response from the mobile terminal. Although the distance correspondence value in this embodiment is a two-frequency phase difference, it may be an RTT. The measured distance value corresponds to a parameter obtained by converting a distance correspondence value expressed in a time or angle dimension into a distance dimension. The measured distance value is calculated as a one-way distance. As another aspect, the measured distance value may be a round trip distance. Furthermore, a relationship of L=C·Δϕ/(4πΔf) is satisfied, when the phase difference between the two frequencies is defined as Δϕ, the propagation speed of the radio wave is defined as C (3×10^8 m/sec), the difference between the two frequencies is defined as Δf, and the one-way distance to the mobile device 2 is defined as L. The measured distance value can be calculated using the relationship. Also, when using RTT as the distance correspondence value, the measured distance value can be calculated using the relational expression of L=RTT C/2.

The communication IC 63 or the processor 66 may convert the distance correspondence value into the measured distance value. "Acquisition" in the present disclosure includes generation/detection/determination by internal calculation based on data input from other devices/sensors. This is because the functional arrangement within the system is changed as appropriate.

Here, as an example, the processor 66 has a calculation function of the measured distance value. The signal processor 6x may use a distance correspondence value such as a two-frequency phase difference or RTT expressed in a time or angular dimension as it is as the measured distance value. The concept of the measured distance value can include the distance correspondence value such as two-frequency phase difference and RTT.

Further, when calculating the two-frequency phase difference, transmission and reception phase differences at plural frequencies are required. In a configuration in which the switching time is shorter than the hopping cycle, the signal processor 6x can calculate the two-frequency phase difference based on the transmission/reception phase difference at other frequencies observed in the past. The combination of ranging frequencies used to calculate the two-frequency phase difference may be set in advance or may be dynamically determined. The signal processor 6x may acquire the transmission/reception phase difference at the current frequency when the frequency used for communication is switched. The current frequency refers to the frequency that is currently in use (ie, during use). In the present disclosure, a measured distance value derived from a distance correspondence value observed in distance measurement communication using the first antenna 4a is also referred to as a first distance measurement value.

The signal processor 6x dynamically selects a combination in which the difference frequency Δf, which is the difference in frequency, is 10 MHz or more and less than 70 MHz as a distance measurement frequency, and calculates the two-frequency phase difference and the measured distance value. The signal processor 6x may calculate the two-frequency phase difference and the measured distance value for a combination of plural frequencies. The final distance measurement value may be determined by calculating the measured distance value for each combination of frequencies whose population is four or more frequencies and combining them.

In Step S13, the ranging communication using the second antenna 4b is performed. Step S13 includes setting the connection state of the switch 61 to the second connection state, transmitting a ranging signal to the mobile terminal, and receiving a response from the mobile terminal.

In Step S14, the signal processor 6x acquires the reception strength, the distance correspondence value (two-frequency phase difference), and the measured distance value based on the result of receiving the response from the mobile terminal. In Step S14, the measured distance value is calculated based on the distance correspondence value. In this disclosure, the measured distance value derived from the distance correspondence value observed by the distance measurement communication using the second antenna 4b is also referred to as a second distance measurement value.

In Step S15, an output distance measurement value, which is a distance value to be output to an external device such as a smart ECU, is selected from among the first distance measurement value and the second distance measurement value. The output distance measurement value can be used to determine the device position, such as whether the mobile terminal is near the vehicle or inside the vehicle. Therefore, the output distance measurement value can also be called a position determination distance value. Paradoxically, the first distance measurement value and the second distance measurement value can also be interpreted as candidates for the measured distance value used for the position determination. In Step S15, a measured distance value to be used for determining the device position is selected from the measured distance value observed using the first antenna 4a and the measured distance value observed using the second antenna 4b. The device position here refers to the relative position of the mobile terminal with respect to the vehicle. The device position may be expressed in an area such as inside the vehicle, near the driver's door, near the passenger seat, near the trunk, and the like. The device position may be expressed in relative coordinates with a predetermined position of the vehicle as the origin.

The signal processor 6x employs the smaller of the first distance measurement value and the second distance measurement value as the output distance value. If the mobile terminal is in a multipath environment and the signal from the mobile terminal is reflected by other objects and reaches the radio device 100, the measured distance value may be calculated to be longer than the actual distance. The smaller of the two measured distance values is less likely to be affected by multipath. The above control was created with an eye on this situation, and by adopting the smaller of the first distance measurement value and the second distance measurement value as the output distance value, it is possible to restrict erroneous determination that is the possibility that the position of the mobile terminal is determined based on the erroneously measured distance value. In addition, as another aspect, the signal processor 6x may select the one with the smaller amount of change from the measured distance value adopted in the previous process among the two distance measurement values obtained in the current distance reporting process for the current output.

In Step S16, the output reception strength, which is the reception strength to be output to an external device such as a smart ECU, is selected from among the first reception strength and the second reception strength. The output reception strength may also be used to determine the device position. Therefore, the output reception strength can also be called the position determination reception strength. Further, in step S16, it can be said that the reception strength to be used for determining the device position is selected among the first reception strength and the second reception strength.

The signal processor 6x adopts the larger one of the first reception strength and the second reception strength as the output reception strength. As another aspect, the signal processor 6x may be configured to output the reception strength observed by the antenna 4 with the smallest calculated distance value among the plural antennas 4 to the smart ECU. The antenna 4 with the smallest measured distance value is highly likely to be able to receive direct waves from the mobile terminal, and has a relatively low possibility of being affected by multipath fading. According to the configuration in which the reception strength observed by the antenna 4 with the smaller measured distance value is adopted as the output reception strength, it can be expected to have the effect of increasing the accuracy of position determination of the mobile terminal based on the reception strength.

In Step S17, a data set including the output distance value determined in step S15 and the output reception strength determined in step S16 is output as observation result data to the smart ECU. When step S17 is completed, this flowchart ends. In addition to the reception strength and the distance measurement value, the observation result data may include a radio ID, which is the identification number of the radio device 100, as information indicating the transmission source, a timestamp, which indicates the observation time, and the like.

### <Summary of the operations and effects of the signal processor>

The signal processor 6x adopts the relatively smaller value of the two measured distance values observed using each of the two antennas as the measured distance value. In other words, among the measured distance values for each antenna, the one that is relatively larger is discarded. According to this configuration, it is possible to reduce the possibility that distance information affected by multipath is used to determine the device position. As a result, the accuracy of determining the device position can be improved.

Further, the signal processor 6x adopts the relatively larger value of the two reception strengths observed using each of the two antennas as the output reception strength. In a configuration in which the reception strengths observed by plural antennas can be used to determine the device position, a configuration that uses the average value of the reception strengths observed by each antenna is generally considered. However, if the plane of polarization differs for each antenna, the sensitivity of each antenna may differ depending on the orientation of the mobile terminal. In a configuration where each antenna has a different plane of polarization, averaging the reception intensities of multiple antennas may lead to erroneous determination of the device position. In response to this situation, a configuration in which the highest reception strength observed by multiple antennas installed inside the housing is adopted as the output received strength, so as to have the effect of reducing the possibility that the device position will be incorrectly determined due to a mismatch in the polarization planes between the antenna and the mobile terminal.

While the embodiment of the present disclosure has been described above, the present disclosure is not limited to the embodiment described above. Various modifications to be described below are also included in the technical scope of the present disclosure. Besides the modifications to be described below, the present disclosure can be implemented with various changes without departing from the gist of the present disclosure. The various supplements and modifications described below can be implemented in appropriate combinations within the scope of technical inconsistency.

### <Supplement in the antenna structure: Modification example (1)>

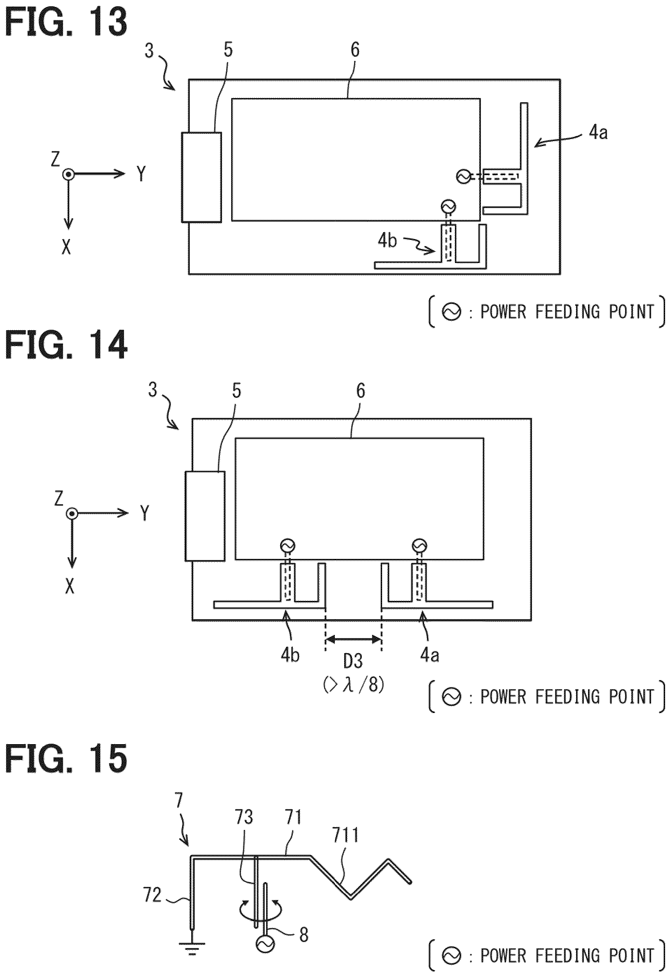

The structure and positional relationship of the first antenna 4a and the second antenna 4b shown in FIG. 2 and the like are merely examples, and can be changed as appropriate. As shown in FIG. 13, the first antenna 4a may be formed in an orientation that is an inversion of that illustrated in FIG. 2 with the X-axis as the axis of symmetry. Further, as shown in FIG. 14, the first antenna 4a and the second antenna 4b may be arranged so that their main bodies 71 are aligned substantially in the same straight line. In order to ensure isolation, the separation distance (D3) between the first antenna 4a and the second antenna 4b is preferably set to λ/8 or more.

### <Supplement in the antenna structure: Modification example (2)>

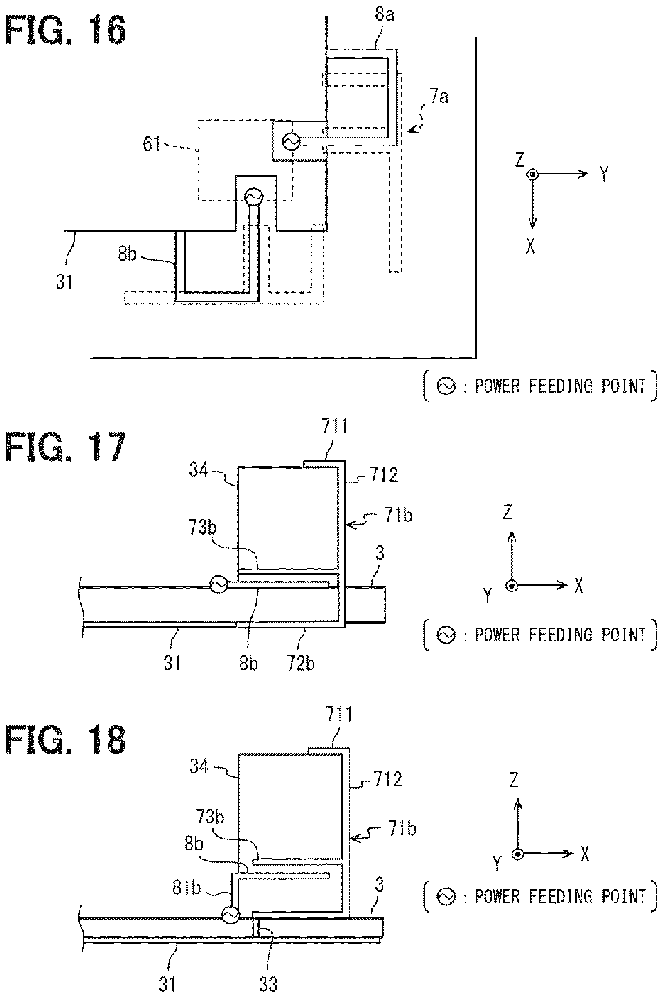

As shown in FIG. 15, the main body 71 of the antenna 4 may have a bent portion 711. Indirect power feeding to the inverted F antenna using electromagnetic coupling, which is one characteristic configuration of the present disclosure, is also applicable to a configuration in which a part of the main body 71 is formed in a meandering shape. By combining indirect feeding and the meandering shape, it is possible to expect the effect of further downsizing the antenna 4. Further, the feeding element 8 does not necessarily have to be linear, and may have a bent shape or may be formed in a loop shape. As shown in FIG. 16, the feeding element 8a, 8b may be formed in a loop shape connected to the ground portion 31.

### <Supplement in the antenna structure: Modification example (3)>

The second antenna 4b may have a three-dimensional shape. As shown in FIG. 17, the second antenna 4b may be configured as a three-dimensional inverted F antenna in which the main body 71b is erected perpendicularly to the substrate.

In the example shown in FIG. 17, the short circuit part 72b of the second antenna 4b is formed on the same surface as the ground portion 31, and the main body 71b is erected upward from the end of the short circuit part 72b. The powered part 73b extends from the main body 71b so as to face the power feeding element 8b formed on the upper surface of the circuit board 3 with a predetermined distance therebetween.

The second antenna 4b having such a three-dimensional shape can be fixed by a rectangular parallelepiped-shaped or plate-shaped support portion 34 made of a dielectric material having a dielectric constant of a predetermined value or more. The main body 71b of the second antenna 4b may be patterned on the surface of the support portion 34. The powered part 73b may be provided inside the support portion 34 or may be provided on a side surface of the support portion 34.

The support portion 34 may be integrally formed with the circuit board 3. Such a support portion 34 can also be referred to as a step portion. Further, the support portion 34 may be a dielectric block/board manufactured separately from the circuit board 3. The support portion 34 may be a member assembled to the surface of the circuit board 3. The support portion 34 may be fixed to the surface of the circuit board 3.

Further, a bent portion 711 for controlling the height may be formed on the open end of the main body 71b. Since the current intensity is relatively small on the open end of the main body 71b, it can be expected that the influence on the antenna characteristics due to the provision of the bent portion 711 will be within an allowable range. The antenna characteristics refers to directivity and polarization/deterioration in polarization plane. The bent portion 711 may have a length of approximately 25% to 50% of the main body 71b.

According to the configuration in which power is indirectly supplied to the radiating element 7b using electromagnetic coupling, the length of the main body 71b can be suppressed compared to the first comparative configuration. Furthermore, as shown in FIG. 17, in a configuration in which the main body 71b is erected with respect to the circuit board 3, it is possible to obtain the effect of suppressing the height of the second antenna 4b.

Although FIG. 17 shows the short circuit part 72b formed on the same surface as the ground portion 31, the short circuit part 72b may be formed on the upper surface of the circuit board 3, as shown in FIG. 18. The second antenna 4b as a three-dimensional indirect feeding type inverted F antenna may be formed as a module integrated with a resin block as the support portion 34. In the configuration example shown in FIG. 18, the short circuit part 72b can be a conductor patterned on the bottom surface of the support portion 34, and the main body 71b can be formed on the side surface of the support portion 34. Further, the powered part 73b is a conductor added to the inside or side surface of the support portion 34. The powered part 37b can be realized by inserting a sheet metal / conductor pin or forming a pattern at a position having a predetermined distance from the short circuit part 72b in the support portion 34. The power feeding element 8b can also be realized by inserting a sheet metal / conductor pin in the support portion 34 at a position facing the powered part 73b, or by forming a pattern therein. The power feeding element 8b may include a lead-out portion 81b to connect a portion formed inside the support portion 34 to a terminal of the switch 61. The lead-out portion 81b is patterned on the side surface of the support portion 34. The lead-out portion 81b may be a jumper wire or the like.

### <Supplement in the antenna structure: Modification example (4)>

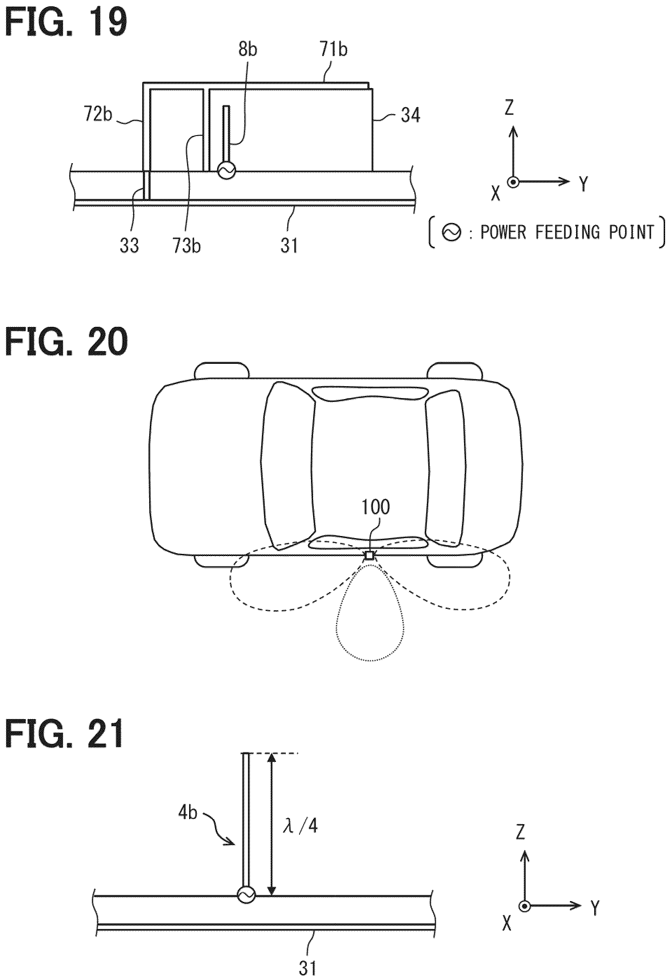

As a configuration example of the three-dimensional second antenna 4b, the configuration shown in FIG. 19 can also be adopted. The second antenna 4b shown in FIG. 19 has a configuration in which the short circuit part 72b and the powered part 73b are arranged perpendicularly to the circuit board 3, and the main body 71b is arranged parallel to the circuit board 3. The power feeding element 8b is erected with respect to the circuit board 3 so as to face the powered part 73b with a predetermined distance therebetween. The second antenna 4b can be supported by the support section 34. If sufficient strength can be ensured with the second antenna 4b alone, the support portion 34 may be omitted. The support portion 34 is an optional element. The short circuit part 72b is electrically connected to the ground portion 31 using the via 33 provided on the circuit board 3.

Since the radio device 100 is attached with the circuit board 3 facing the attachment target part, if the second antenna 4b is a three-dimensional antenna, the second antenna 4b will be in a position perpendicular to the vehicle body. Therefore, it becomes possible to propagate the radio waves from the second antenna 4b from the attachment target part along the vehicle body. According to the configuration in which the radio device 100 is attached to the outer surface of the B-pillar, as shown by the broken line in FIG. 20, a good communication area is provided in the direction along the side surface of the vehicle body, that is, in the longitudinal direction of the vehicle and in the vertical direction of the vehicle. The broken line in FIG. 20 conceptually shows the beam formed by the second antenna 4b installed upright on the circuit board 3, and the dotted line shows the beam formed by the first antenna 4a in a planar manner on the surface of the circuit board 3. The size and shape of each beam are exaggerated to ensure visibility.

Furthermore, depending on the configuration of the inverted F antenna, a strong current may flow through the short circuit part 72. The closer the short circuit part 72 and the powered part 73 are brought together, the more likely the current will be concentrated in the short circuit part 72. Furthermore, in a monopole antenna or the like, a portion where the current distribution is relatively dense may form the main beam. Taking this into consideration, in a setting where a strong current flows through the short circuit part 72, a main beam may be formed in a direction perpendicular to the short circuit part 72. In the configuration shown in FIG. 19, since the short circuit part 72b is perpendicular to the circuit board 3, an effect can be expected that a strong electric field area can be formed in a direction along the side surface of the vehicle.

### <Supplement in the antenna structure: Modification example (5)>

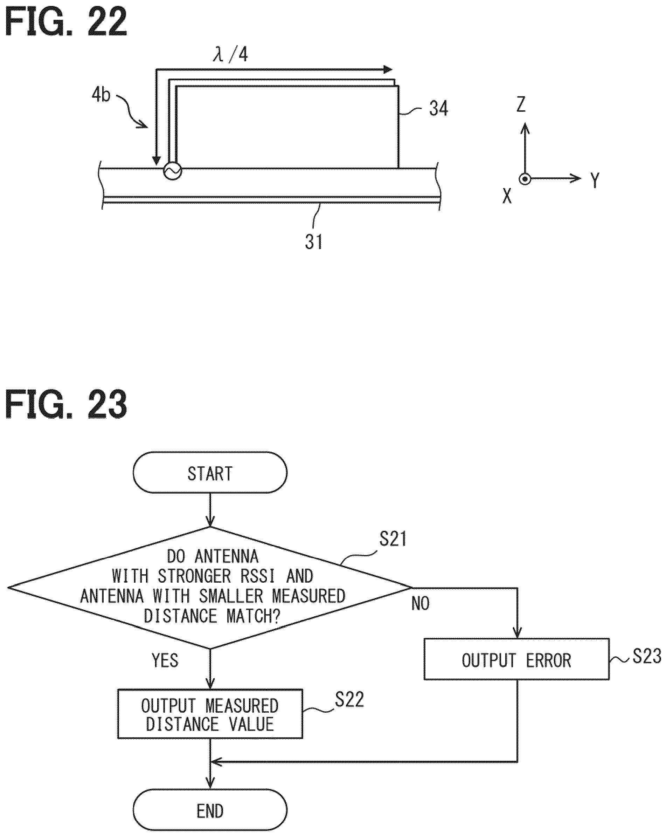

Although the second antenna 4b is an indirectly fed inverted F antenna in the above description, the second antenna 4b may also be configured as a monopole antenna as shown in FIGS. 21 and 22, or an inverted L antenna.

Further, in Modification examples (3) and (4), the second antenna 4b is a three-dimensional antenna, but the first antenna 4a may be configured three-dimensionally. The above explanation regarding the three-dimensional structure of the second antenna 4b can be used as an explanation of the structure of the first antenna 4a formed to stand up on the circuit board 3. Further, both the first antenna 4a and the second antenna 4b may be configured as three-dimensional antennas. The three-dimensional antenna refers to an antenna that has a portion erected on the upper surface of the circuit board 3. In addition, the shapes/dimensions of the first antenna 4a and the second antenna 4b may be different. The radio device 100 may be provided with three or more antennas 4.

### <Supplement in the configuration for antenna switching: Modification example (6)>

The function corresponding to the switch 61 may be built into the communication IC 63. The signal processor 6x may be configured to switch the antenna 4 used for distance measurement etc. by switching a port (terminal) that outputs a high frequency signal in the communication IC 63.

### <Supplement in the operation of the signal processor: Modification example (7)>

In a configuration in which the installation target part is a vehicle side part such as a door side B-pillar, and the second antenna 4b is a three-dimensional antenna, the signal processor 6x may be configured to adopt the reception strength observed by the second antenna 4b as reception strength for output. Since the second antenna 4b is installed upright with respect to the circuit board 3, the second antenna 4b easily receives signals from mobile terminals located near the vehicle and within 1 m from the door than the first antenna 4a. Therefore, the reception strength at the second antenna 4b may be more suitable as a criterion for determining whether or not the mobile terminal is present near the door outside the vehicle than the reception strength at the first antenna 4a. Under such circumstances, the signal processor 6x is configured to select the reception strength at the second antenna 4b as the output reception strength, regardless of the reception strength at the first antenna 4a, in step S16.

### <Supplement inn the operation of the signal processor: Modification example (8)>

As shown in FIG. 23, if the antenna 4 with the stronger reception strength and the antenna 4 with the smaller measured distance value do not match, the signal processor 6x may be configured to stop outputting the measured distance value, or output an error value. A case where the antenna 4 with a large reception strength and the antenna 4 with a small distance measurement value do not match means, for example, that the first reception strength is greater than the second reception strength by a predetermined value or more, and the second measurement value is higher than the first measurement value by a predetermined value or more. The error value is a predetermined value indicating that a valid ranging result has not been obtained. The error value can also be called a ranging error code.

Generally, the higher the reception strength, the better the signal from the mobile terminal can be received. If the signal from the mobile terminal can be received well, it can be expected that the measured distance value will have a small error with respect to the actual distance to the mobile terminal. Therefore, it can be expected that the antenna with the highest reception strength among the plural antennas 4 and the antenna 4 with the lowest measured distance value match. However, in a multipath environment, interference between reflected waves may cause the reception strength to be evaluated higher than the reception strength of the direct wave that should be observed. In other words, the fact that the antenna 4 with the stronger reception strength and the antenna 4 with the smaller measured distance value do not match suggests that the communication environment is not good and it is relatively easy for erroneous distance measurements to occur.

The above configuration was created based on this idea. According to the configuration, it is possible to reduce the risk of the system malfunctioning based on the erroneously measured distance value by stopping the output of the measured distance value data is stopped or outputting an error value, if the antenna 4 with the highest reception strength and the antenna 4 with the lowest measured distance value do not match. A direct wave in the present disclosure refers to a signal that reaches without being reflected by the vehicle body, the ground, or the like. The direct wave can include a diffracted wave, which is a signal that has arrived through wraparound (diffraction). The flowchart shown in FIG. 23 can be executed, for example, as a subflow of step S15.

### <Additional Notes>

The device and the method as the signal processor 6x described in the present disclosure are realized by a dedicated computer constituting a processor programmed to execute one or more functions embodied by a computer program. The device and the method described in the present disclosure may be implemented using a dedicated hardware logic circuit. Furthermore, the device and the method thereof described in the present disclosure may be implemented by one or more dedicated computers including a combination of a processor that executes a computer program and one or more hardware logic circuits. Some or all of the functions included in the signal processor 6x may be realized as hardware. A configuration in which a certain function is implemented by hardware includes a configuration in which the function is implemented by use of one or more ICs or the like. As the processor (arithmetic core), a CPU, an MPU, a GPU, a DFP (Data Flow Processor), or the like can be adopted. Furthermore, some or all of the functions included in the signal processor 6x may be realized by combining plural types of arithmetic processing devices. Some or all of the functions included in the signal processor 6x may be realized using FPGA, ASIC, or the like. The FPGA is an abbreviation for Field Programmable Gate Array. The ASIC is an abbreviation of Application Specific Integrated Circuit. The computer program may be stored in a computer-readable non-transitionary tangible storage medium as an instruction executed by the computer. As a program storage medium, an HDD (Hard-disk Drive), an SSD (Solid State Drive), a flash memory, or the like can be adopted. In addition to the radio device 100 described above, various forms such as a position determination system for a mobile terminal including plural radio devices 100 and a smart ECU as components are also included in the scope of the present disclosure. Further, the scope of the present disclosure includes a control program for causing a computer to function as the signal processor 6x, and forms such as a non-transitional physical recording medium such as a semiconductor memory in which this program is recorded.

## Claims

1. An antenna module comprising:
a substrate (3);
an antenna (4) configured to transmit or receive a radio wave of a predetermined frequency band; and
a ground portion (31) which is a conductor to provide a ground potential for the antenna, wherein
the antenna has
a radiating element (7) which is a conductor formed in an inverted F shape, and
a feeding element (8) which is a conductor for non-contact feeding power to the radiating element by electromagnetic coupling,
the radiating element has
a main body (71) that is a linear conductor,
a short circuit part (72) connecting one end of the main body to the ground portion, and
a powered part (73) having one end connected to a middle of the main body and the other end being an open end, and
the feeding element is formed parallel to at least a part of the powered part.

2. The antenna module according to claim 1, wherein a width of the feeding element is smaller than a width of the powered part by a predetermined amount.

3. The antenna module according to claim 1 or 2, wherein the main body has a bent shape.

4. The antenna module according to any one of claims 1 to 3, wherein the feeding element has a loop shape.

5. The antenna module according to any one of claims 1 to 4, wherein
the antenna includes a first antenna (4a) and a second antenna (4b), and
a main body of the first antenna is formed along a direction perpendicular to a main body of the second antenna.

6. The antenna module according to claim 5, wherein
the main body of the first antenna is patterned on a surface of the substrate, and
the main body of the second antenna is erected from a surface of the substrate.

7. The antenna module according to claim 5, wherein
the powered part of the first antenna is patterned on a surface of the substrate, and
the powered part of the second antenna is erected on a surface of the substrate.

8. A wireless communication device comprising:
a substrate (3);
a first antenna (4a) to transmit and receive a radio wave of a predetermined frequency band;
a second antenna (4b) to transmit and receive a radio wave of the frequency band;
a ground portion (31) which is a conductor to provide a ground potential for the first and second antennas; and
a signal processor (6x) to transmit and receive a ranging signal to and from a target device using each of the first and second antennas,
each of the first and second antennas has
a radiating element (7a, 7b) that is a conductor formed in an inverted F shape, and
a feeding element (8a, 8b) that is a conductor for non-contactly feeding power to the radiating element through electromagnetic coupling,
the radiating element has
a main body (71a, 71b) that is a linear conductor,
a short circuit part (72a, 72b) connecting one end of the main body to the ground portion, and
a powered part (73a, 73b) having one end connected to a middle of the main body and the other end which is an open end,
the feeding element is formed to face a part of the powered part,
the signal processor is configured to perform:
generating a first ranging value as a ranging value that is a parameter indicating a distance to the target device by transmitting and receiving a ranging signal to and from the target device using the first antenna;
generating a second ranging value as the ranging value by transmitting and receiving a ranging signal to and from the target device using the second antenna; and
outputting a distance information relative to the target device, which is a smaller one of the first distance value and the second distance value to an apparatus that determines a position of the target device.

9. The wireless communication device according to claim 8, wherein the main body of the second antenna is perpendicular to the main body of the first antenna.

10. The wireless communication device according to claim 8 or 9, wherein a main body or a powered part of the second antenna is erected with respect to a surface of the substrate.

11. The wireless communication device according to any one of claims 8 to 10, wherein the signal processor is configured to perform:
obtaining a first reception strength that is a reception strength of a signal from the target device received by the first antenna;
obtaining a second reception strength that is a reception strength of a signal from the target device received by the second antenna; and
outputting a greater one of the first reception strength and the second reception strength to the apparatus.

12. The wireless communication device according to any one of claims 8 to 10, wherein
the main body or the powered part of the second antenna is erected with respect to a surface of the substrate, and
the signal processor is configured to perform:
obtaining a second reception strength that is a reception strength of a signal from the target device received by the second antenna; and
outputting the second reception strength toward the apparatus.

13. The wireless communication device according to any one of claims 8 to 10, wherein the signal processor is configured to perform:
obtaining a reception strength of a signal from the target device received by the first antenna;
obtaining a reception strength of a signal from the target device received by the second antenna; and
outputting the reception strength observed by the first antenna or the second antenna with which a smaller measured distance value is obtained, toward the apparatus.

14. The wireless communication device according to any one of claims 8 to 10, wherein the signal processor is configured to stop the outputting of the distance information or output a predetermined error value toward the apparatus, when the antenna from which the smaller measured distance value is obtained does not match the antenna from which the received strength is larger, between the first antenna and the second antenna.
